# EUROPEAN PATENT APPLICATION

(11) **EP 4 589 241 A1**
(43) Date of publication of application: **23.07.2025**
(21) Application number: 24200257.4
(22) Date of filing: 13.09.2024
(51) Int. Cl.: F41G 1/38, F41G 1/16

(54) **OPTICAL SIGHT**

(30) Priority: 22.01.2024 JP 2024007510
(71) Applicant: Light Optical Works, Ltd., Suwa-City, Nagano 392-0015 (JP)
(72) Inventor: SEKI, Kenichi, Nagano, 3920015 (JP); HANAOKA, Kan, Nagano, 3920015 (JP); SAKAI, Kensuke, Nagano, 3920015 (JP)
(74) Representative: Becker, Eberhard

(57) **Abstract**

An optical sight (10) includes: an optical system (20) which includes a lens holding tube (21) in which a lens group is housed; a housing (30) which houses the optical system (20); and an impact point adjustment unit (100) which includes an adjustment mechanism (110) that changes the inclination of the lens holding tube (21) by rotating a dial (111) to move a shaft (112b) inserted into the housing (30) up or down without moving the dial (111) up or down. The impact point adjustment unit (100) further includes a first ring (120) that rotates integrally with the dial (111) and a second ring (130) that is provided between the first ring (120) and the housing (30). The first ring (120) is connected to the adjustment mechanism (110) via a dial (111) in a zero stop state in which the first ring (120) is rotatable merely in a first rotation direction.

## Description

### BACKGROUND

### Technical Field

The disclosure relates to an optical sight mounted on a hunting gun or a sporting gun.

### Description of Related Art

Conventionally, optical sights mounted on hunting guns or sporting guns have been known to have a structure that are provided with a mechanism for adjusting the point of impact called a turret (see, for example, Patent Literature 1 (Japanese Patent Application Laid-Open No. 2004-150699)).

A turret is equipped with a zero stop function. The zero stop function is a function that allows the dial to rotate in one rotation direction, starting from the rotation state of the dial in the adjustment mechanism where zero-in adjustment has been made for a certain point of impact, while preventing the dial from rotating in the other rotation direction, that is, the opposite rotation direction. In this way, even after the point of impact is adjusted by rotating the dial in one rotation direction, the point of impact can easily return to the zero-in adjusted rotation position by fully rotating the dial in the opposite rotation direction.

A turret structure is broadly divided into two types. One is a type in which the dial itself moves up or down when turned, and the other is a type in which the dial itself does not move up or down when turned, but rather an internal part moves up or down. The latter type is seeing increased demand in recent years in the market where compact products are preferred, as the dial itself does not move up or down, allowing the height of the turret to be kept low.

Conventionally, it has not been clear how to achieve a zero stop function with a simple mechanism in an adjustment mechanism in which the dial itself does not move up or down.

The disclosure provides an optical sight that employs an adjustment mechanism in which the dial itself does not move up or down, and in which the zero stop function is configured with a simple mechanism.

### SUMMARY

The optical sight of the disclosure allows a user to visually recognize a target, and includes an optical system, a housing, and an impact point adjustment unit.

The optical system includes a lens holding tube in which a lens group is housed.

The housing houses the optical system.

The impact point adjustment unit includes an adjustment mechanism, a first ring, and a second ring. The adjustment mechanism is provided on the housing, and when the user rotates a dial, the inclination of the lens holding tube is changed without moving the dial up or down. The first ring is connected to the dial and rotates integrally therewith. The second ring is provided between the first ring and the housing.

The first ring includes a first protrusion that protrudes toward the second ring, and is connected to the adjustment mechanism via a dial in a zero stop state in which the first ring is rotatable merely in a first rotation direction.

The zero stop state is formed in such a manner that the first pin protruding from the second ring toward the first ring prevents the first protrusion from advancing in a second rotation direction which is opposite to the first rotation direction.

The first pin retracts from the second ring after the first ring starts to rotate in the first rotation direction and before the first protrusion reaches a position of the first pin.

The impact point adjustment unit of the optical sight of the disclosure may further include a mechanism for providing a rotation indicator which enables the number of rotations of the dial to be recognized based on a change in a position of the second ring in a rotation direction before and after interlocking rotation by rotating the second ring in conjunction with the first ring within a certain range when the first ring advances from a first rotation to a second rotation in the first rotation direction.

The optical sight of the disclosure further includes a follower, which is present between the first ring and the second ring and is pressed against the second ring from the first ring side. The second ring may include a connection holding unit, which is a recess, on a first surface that faces the first ring, a rotation limiting groove extending a certain length on a second surface that faces the housing, and a first through hole that penetrates the first surface and the second surface.

In addition, the first pin may be present between the second ring and the housing and be pressed from the second ring side toward the housing side. The housing may include a second protrusion and a pin control protrusion that protrude toward the second ring.

The zero stop state may be formed in such a manner that the first pin is pushed up by the pin control protrusion, passes through the first through hole, and protrudes into a first track of an annular shape on the first surface that is traced by the first protrusion as the first ring rotates, and the first protrusion is prevented from advancing in a second rotation direction.

In addition, the mechanism for providing a rotation indicator may be achieved by being configured in such a manner that the follower which follows the rotation of the dial and traces a second track of an annular shape on the first surface engages with the connection holding unit formed on the second track when the dial rotates once in the first rotation direction, and the second ring starts to rotate in conjunction with the first ring. As a result, a position of the pin control protrusion relative to the second ring is moved, pushing up of the first pin is released, and the first pin is retracted from the first track, so that the first protrusion is capable of passing over the first through hole. Furthermore, after the second protrusion engaged with the rotation limiting groove moves from one end of the rotation limiting groove and reaches the other end, when the first ring is further rotated, the follower is released from the connection holding unit, the interlocking of the second ring is released, and the first ring starts a second rotation in the first rotation direction.

The optical sight of the disclosure may further include a second pin which is present between the second ring and the housing and is pressed from the second ring side toward the housing side and a second through hole which is formed in the second ring and penetrates the first surface and the second surface.

When the second ring starts to rotate in the first rotation direction in conjunction with the first ring, the position of the second ring relative to the pin control protrusion is moved, the pushing up of the first pin is released, and then the second pin is pushed up, passes through the second through hole, and protrudes into the first track of an annular shape on the first surface that is traced by the first protrusion, and a second rotation of the first ring in the first rotation direction ends when the advancement of the first protrusion is blocked by the second pin.

The optical sight of the disclosure may further include a first holding unit and a second holding unit which are two recesses formed on the second surface of the second ring and a malfunction prevention body which is provided between the second ring and the housing and pressed against the second ring from the housing side.

When the first ring advances from the first rotation to the second rotation in the first rotation direction, the second ring rotates in the first rotation direction in conjunction with the first ring, the position of the second ring relative to the malfunction prevention body is moved, and the malfunction prevention body which has been fitted into the first holding unit during the first rotation moves to and engages with the second holding unit.

### BRIEF DESCRIPTION OF THE DRAWINGS

FIG. 1 is a functional configuration diagram of an optical sight 10 according to the disclosure.
FIG. 2 is a schematic cross-sectional view of an impact point adjustment unit 100.
FIGS. 3A and 3B are exploded views of the impact point adjustment unit 100.
FIG. 4 is a first diagram showing the positional relationship of the various components when the impact point adjustment unit 100 according to a first embodiment is viewed from above.
FIG. 5 is a second diagram showing the positional relationship of the various components when the impact point adjustment unit 100 according to the first embodiment is viewed from above.
FIG. 6 is a third diagram showing the positional relationship of the various components when the impact point adjustment unit 100 according to the first embodiment is viewed from above.
FIG. 7 is a fourth diagram showing the positional relationship of the various components when the impact point adjustment unit 100 according to the first embodiment is viewed from above.
FIG. 8 is a fifth diagram showing the positional relationship of the various components when the impact point adjustment unit 100 according to the first embodiment is viewed from above.
FIG. 9 is a first diagram showing the positional relationship of the various components when the impact point adjustment unit 100 according to a second embodiment is viewed from above.
FIG. 10 is a second diagram showing the positional relationship of the various components when the impact point adjustment unit 100 according to the second embodiment is viewed from above.
FIG. 11 is a third diagram showing the positional relationship of the various components when impact point adjustment unit 100 according to the second embodiment is viewed from above.
FIG. 12 is a fourth diagram showing the positional relationship of the various components when the impact point adjustment unit 100 according to the second embodiment is viewed from above.
FIG. 13 is a fifth diagram showing the positional relationship of the various components when impact point adjustment unit 100 according to the second embodiment is viewed from above.
FIG. 14 is a first diagram showing the positional relationship of the various components when the impact point adjustment unit 100 according to a third embodiment is viewed from above.
FIG. 15 is a second diagram showing the positional relationship of the various components when the impact point adjustment unit 100 according to the third embodiment is viewed from above.
FIG. 16 is a third diagram showing the positional relationship of the various components when the impact point adjustment unit 100 according to the third embodiment is viewed from above.
FIG. 17 is a fourth diagram showing the positional relationship of the various components when impact point adjustment unit 100 according to the third embodiment is viewed from above.

### DESCRIPTION OF THE EMBODIMENTS

According to the disclosure, in an optical sight that employs an adjustment mechanism in which the dial itself does not move up or down, the zero stop function can be configured with a simple mechanism.

Hereinafter, embodiments of the disclosure are described with reference to the drawings. In the following description, the same members are given the same reference numerals, and the description of functional parts that have already been described will be omitted as appropriate.

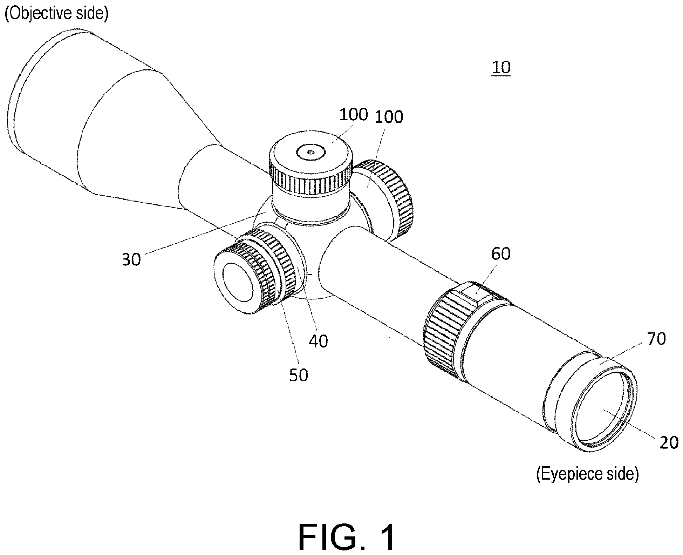

FIG. 1 is an external view of an optical sight 10 of the disclosure. The optical sight 10 is a type of optical device that allows a user to visually recognize a target, and is used by being attached to a gun such as a hunting gun or a sporting gun. More specifically, for example, the type of optical device is attached to a gun (such as a rifle) for long-distance shooting and magnifies a shooting object such as a hunting prey or target that is far away, allowing the user to visually recognize the shooting object.

The optical sight 10 of the disclosure includes an optical system 20, a housing 30, a focus adjustment unit 40, an illumination adjustment unit 50, a magnification adjustment unit 60, a diopter adjustment unit 70, and an impact point adjustment unit 100.

The optical system 20 is an optical system including multiple lenses, such as an eyepiece lens and an objective lens. By pointing the objective side toward the front of the gun and the eyepiece side toward the rear of the gun, the user, who is the shooter, can visually recognize the target for shooting, etc. Some of the lens groups in the optical system 20 are housed in a lens holding tube 21 of which inclination can be changed.

The housing 30 is a housing that houses the optical system 20.

The focus adjustment unit 40 is a functional unit that adjusts the focus with respect to the target. The illumination adjustment unit 50 is a functional unit that adjusts the illumination and brightness of the light-emitting reticle mounted on the optical sight 10. The magnification adjustment unit 60 is a functional unit that adjusts the magnification of the optical sight 10. The diopter adjustment unit 70 is a functional unit that adjusts the diopter for the light-emitting reticle. The functional unit that performs the adjustments may have a known configuration.

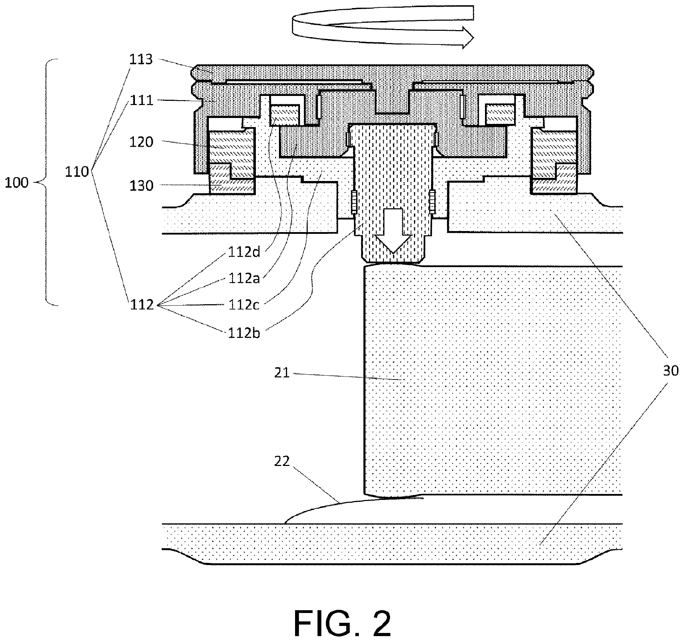

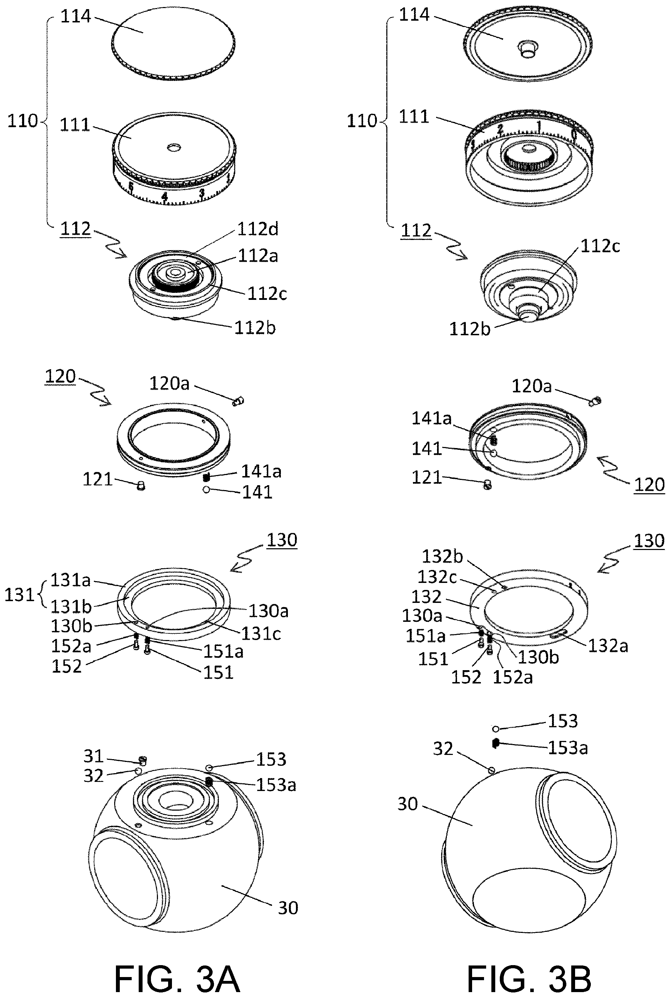

The impact point adjustment unit 100 is a turret according to the disclosure that is provided on the housing 30. FIG. 2 is a schematic cross-sectional view of the impact point adjustment unit 100. Further, FIGS. 3A and 3B are exploded views of the impact point adjustment unit 100, in which FIG. 3A is a perspective view from above, and FIG. 3B is a perspective view from below.

The impact point adjustment unit 100 includes an adjustment mechanism 110, a first ring 120, a second ring 130, a mechanism for forming a zero stop state, and a mechanism for providing a rotation indicator.

The adjustment mechanism 110 is a component of a conventional turret and includes a dial 111 which is a member that is rotated by a user, a shaft drive unit 112, and a fixing screw 113 which is a member for preventing the dial 111 from falling off. The adjustment mechanism 110 moves a shaft 112b of the shaft drive unit 112 up or down by the user rotating the dial 111, without moving the dial 111 up or down.

The shaft drive unit 112 includes a rotating ring 112a, the shaft 112b, a shaft base 112c, and a lock ring 112d that prevents the rotating ring 112a from floating up or falling off.

The rotating ring 112a is a member that is connected to the dial 111 and rotates integrally therewith.

The shaft 112b is a rod-shaped member having a male thread partially formed on the surface, and is connected to the rotating ring 112a so as to be movable up or down and to be rotatable integrally with the rotating ring 112a.

The shaft base 112c is a member into which the shaft 112b is inserted, and is fixed to an opening provided in the housing 30. When the shaft 112b is inserted into the shaft base 112c, the tip end is inserted into the housing 30 through the opening of the housing 30 and comes into contact with the outer side surface of the lens holding tube 21.

A female screw is formed in the cylindrical portion of the shaft base 112c into which the shaft 112b is inserted. The male thread of the shaft 112b inserted into the portion concerned is engaged with the female thread. Since the shaft base 112c is fixed to the housing 30, when the shaft 112b (dial 111) is rotated, the shaft 112b moves up or down. Since the shaft 112b is connected to the rotating ring 112a so as to be movable up or down, even if the shaft 112b moves up or down, the dial 111 does not move up or down.

When the shaft 112b is moved up or down, the pressing force of the shaft 112b on the lens holding tube 21 changes. On the opposite side of the shaft 112b across the lens holding tube 21, for example, as shown in FIG. 2, a leaf spring 22 is provided, and a repulsive force corresponding to the pressing force of the shaft 112b is applied to the lens holding tube 21 by the leaf spring 22. Therefore, by moving the shaft 112b up or down, the inclination of the lens holding tube 21 can be controlled, and the point of impact can be adjusted.

The configuration of the adjustment mechanism 110 described here is just an example. Other configurations may be used as long as the user can change the inclination of the lens holding tube by rotating the dial without moving the dial up or down.

The first ring 120 is connected to the dial 111 by a connecting screw 120a or the like, and rotates integrally with the dial 111. For example, when the dial 111 is rotated once, the first ring 120 also rotates once in the same rotation direction.

The first ring 120 is connected to the adjustment mechanism 110 via the dial 111 in a zero stop state in which the first ring 120 is rotatable merely in one rotation direction, that is, a first rotation direction. The mechanism for forming the zero stop state will be described later.

A zero stop function is achieved in which the first ring 120 in the zero stop state is connected via the dial 111 to the adjustment mechanism 110 that has been zero-in adjusted for a certain impact point, a rotation state (movement state of the shaft 112b) of the adjustment mechanism 110 in which zero-in adjustment has been performed is used as a starting point, and the dial 111 (first ring 120) is made rotatable in the first rotation direction, but is not allowed to rotate in a second rotation direction which is the opposite rotation direction.

The second ring 130 is provided between the first ring 120 and the housing 30.

The mechanism for providing a rotation indicator is a mechanism that enables the user to recognize a rotation indicator indicating the number of rotations of the first ring 120 (dial 111) based on the change in the position of the second ring 130 in the rotation direction before and after the interlocking rotation by rotating the second ring 130 in conjunction with the first ring 120 within a certain range when the first ring 120 is rotated once in the first rotation direction and moved to the second rotation.

Specifically, the mechanism for forming the zero stop state and the mechanism for providing a rotation indicator can be achieved in a compatible manner, for example, as follows.

First, a first protrusion 121 that protrudes toward the second ring 130 is provided on the surface of the first ring 120 that faces the second ring 130. The first protrusion 121 may be formed integrally with the first ring 120, or may be formed as a separate member such as a screw or pin that is attached to the first ring 120 as shown in FIGS. 3A and 3B.

In addition, the second ring 130 is provided with a connection holding unit 131c, which is a recess on a first surface 131 that faces the first ring 120, a rotation limiting groove 132a extending for a certain length on a second surface 132, which is the reverse surface of the first surface 131 and faces the housing 30, and a first through hole 130a that penetrates the first surface 131 and the second surface 132.

In addition, a follower 141 is provided between the first ring 120 and the second ring 130 and is pressed against the first surface 131 of the second ring 130 from the first ring 120 side. The follower 141 is preferably a sphere such as a steel ball, which can easily roll or slide smoothly on the first surface 131 of the second ring following the rotation of the first ring 120. The pressing of the follower 141 from the first ring 120 side to the second ring 130 may be achieved, for example, by inserting a spring 141a such as a compression coil spring between the first ring 120 and the follower 141. Specifically, for example, the follower 141 may be sandwiched between the other end of the spring 141a of which one end is supported by the surface of the first ring 120 facing the second ring 130 and the first surface 131 of the second ring 130.

In addition, a first pin 151 which is pressed from the second ring 130 side toward the housing 30 side is provided between the second ring 130 and the housing 30. The application of pressure from the second ring 130 side toward the housing 30 side may be achieved, for example, by inserting a spring 151a between the second ring 130 and the first pin 151. Specifically, for example, a pin with a head is used as the first pin 151, and a compression coil spring is used as the spring 151a. Then, the shaft unit of the first pin 151 is inserted into the coil of the spring 151a from the other end of the spring 151a of which one end is supported by the second surface 132 of the second ring 130, and is configured to be pressed against the head seat of the first pin 151 by the elastic force of the spring 151a.

Furthermore, a second protrusion 31 and a pin control protrusion 32 that protrude toward the second ring 130 are provided on the surface of the housing 30 that faces the second ring 130. The second protrusion 31 may be formed integrally with the housing 30, or may be formed as a separate member such as a screw or pin that is attached to the housing 30 as shown in FIG. 3A. The pin control protrusion 32 is preferably a protrusion of a spherical shape, for example, which allows the head of the first pin 151 to easily roll or slide. The pin control protrusion 32 of a spherical shape may be achieved, for example, by fitting a sphere into a recess provided in the housing 30. Furthermore, in this case, a spring may be inserted between the housing 30 and the pin control protrusion 32. In this way, the pin control protrusion 32 has a cushioning property, and is expected to improve the rolling and sliding properties of the first pin 151.

In such a configuration, the zero stop state is formed in such a manner that the first pin 151 which has been pushed up from the head by the pin control protrusion 32 passes through the first through hole 130a, and protrudes into a first track 131a of an annular shape on the first surface 131 that is traced by the first protrusion 121 as the first ring 120 rotates, and the first protrusion 121 is prevented from advancing in the second rotation direction.

In addition, the mechanism for providing a rotation indicator is achieved as follows.

First, the follower 141, which follows the rotation of the dial 111 and traces a second track 131b of an annular shape on the first surface 131 of the second ring 130, engages with the connection holding unit 131c formed on a second track 131b when the dial 111 rotates once in the first rotation direction. In this way, the second ring 130 is connected to the first ring 120 and rotates in conjunction with the first ring 120.

When the position of the pin control protrusion 32 relative to the second ring 130 is moved by the rotation of the second ring 130, the pushing up of the first pin 151 by the pin control protrusion 32 is released, and the first pin 151 that has been protruding from the first through hole 130a to form the zero stop state is retracted. This allows the first protrusion 121 to pass over the first through hole 130a. In addition, due to the rotation of the second ring 130, after the second protrusion 31 engaged with the rotation limiting groove 132a moves from one end of the rotation limiting groove 132a and reaches the other end, when the first ring 120 is further rotated, the follower 141 is released from the connection holding unit 131c, the connection with the second ring 130 is released, and the first ring 120 starts a second rotation in the first rotation direction.

In this way, when the first ring 120 moves from the first rotation to the second rotation, the second ring 130 rotates in conjunction with the first ring 120 within a certain range, and the change in the position of the second ring 130 in the rotation direction relative to the reference position 30a of the housing 30 before and after the interlocking rotation of the second ring 130 can be provided as a rotation indicator.

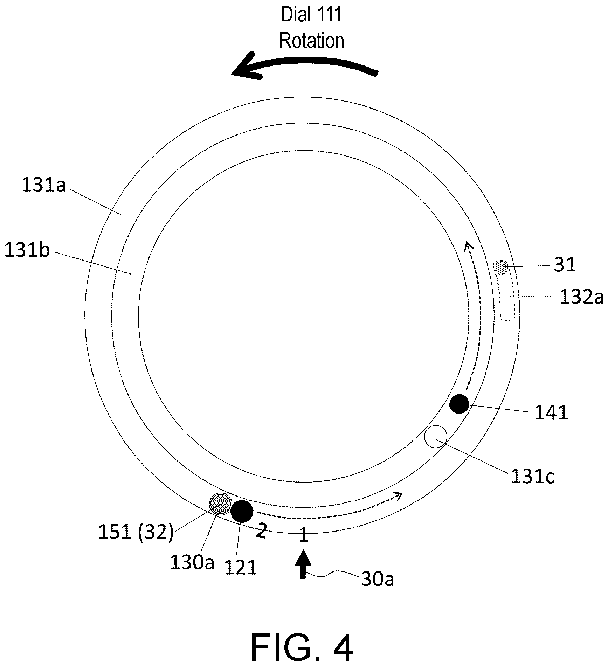

When the dial 111 is rotated, how the components of the impact point adjustment unit 100 work together to achieve both the mechanism for forming the zero stop state and the mechanism for providing a rotation indicator are described with reference to FIGS. 4 to 8. FIGS. 4 to 8 show the positional relationship of the various components of the first surface 131 and the second surface 132 of the second ring 130 when the impact point adjustment unit 100 is viewed from above. Further, in the following, a case will be described in which the first rotation direction is counterclockwise and the second rotation direction is clockwise, but even if the first rotation direction is clockwise and the second rotation direction is counterclockwise, a similar mechanism can be achieved by inverting the arrangement of the various components.

FIG. 4 shows the zero stop state in which the dial 111 is unable to be rotated clockwise. In the state, the first pin 151 is located above the pin control protrusion 32, as a result, the head of the first pin 151 is pushed up, and the shaft unit passes through the first through hole 130a and protrudes into the first track 131a. In addition, the first protrusion 121 is adjacent to the protruding first pin 151 in the counterclockwise direction and is unable to move clockwise. Therefore, the dial 111, which rotates in conjunction with the first ring 120 on which the first protrusion 121 is provided, is unable to be rotated clockwise.

At this time, the follower 141 is in the vicinity of the connection holding unit 131c in the counterclockwise direction, and the second protrusion 31 is at the end unit in the counterclockwise direction of the rotation limiting groove 132a.

In addition, rotation indicators are displayed on the side surface of the second ring 130 at the positions marked "1" and "2", respectively, in FIG. 4, in the form of letters or marks indicating the first rotation and the second rotation, and the reference position 30a for reading the rotation indicator is set on the housing 30. That is, a rotation indicator indicating the first rotation is displayed at a position on the side surface of the second ring 130 where the rotation indicator indicating the first rotation is read at the reference position 30a during the first rotation including the zero stop state, and a rotation indicator indicating the second rotation is displayed at the position on the side surface of the second ring 130 where the rotation indicator indicating the second rotation is read at the reference position 30a during the second rotation.

The method of providing a rotation indicator is one example, and is based on the change in the position of the second ring 130 in the rotation direction before and after the interlocking rotation. Other methods of providing a rotation indicator may be adopted as long as the user can recognize the rotation indicator indicating the number of rotations of the first ring 120 (dial 111).

As an example of a method of providing a rotation indicator, a mark or symbol indicating the position in the rotation direction may be displayed on the side surface of the second ring 130, and a non-rotating portion or member may be provided that surrounds the periphery of the second ring 130 and has a window or cut-out in part to allow a view through to the side surface of the second ring 130.

Specifically, for example, a mark is displayed at one location on the side surface of the second ring 130, and in the member surrounding the periphery of the second ring 130, a first window may be provided at a position where the mark is present during the first rotation of the first ring 120, and a second window may be provided at a position where the mark of which position has been moved by the rotation of the second ring 130 during the second rotation is located. This allows the rotation indicator to be determined based on which window the mark is displayed in.

For example, a window may be provided in a member surrounding the periphery of the second ring 130, a first mark may be displayed at a position on the side surface of the second ring 130 where a mark or the like can be seen through the window during the first rotation of the first ring 120, and a second mark may be displayed at a position on the side surface of the second ring 130 where the position moves due to the rotation of the second ring 130 during the second rotation and the mark can be seen through the window. This allows the rotation indicator to be determined based on which mark is displayed in the window.

As another example of a method of providing a rotation indicator, in the disclosure, when the dial 111 is rotated once, the rotation of the second ring 130 can be recognized visually or by the change in the weight of the rotation of the dial 111, which may be used as a rotation indicator.

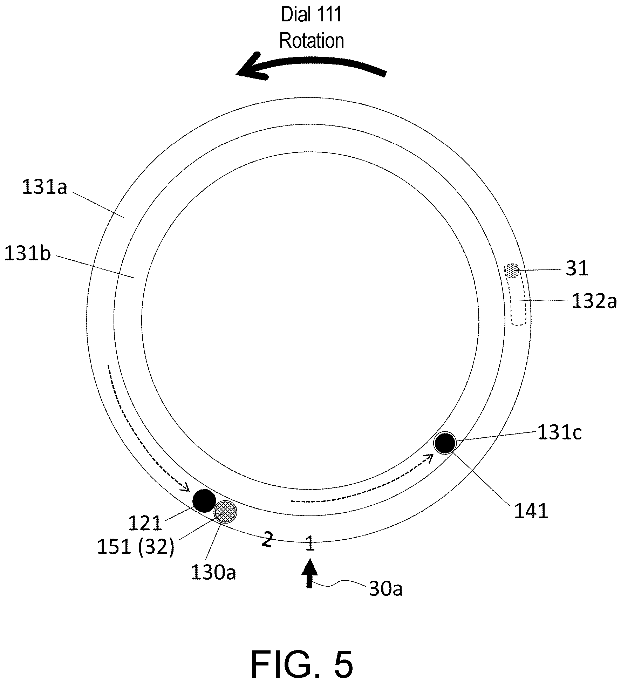

FIG. 5 shows a state in which the dial 111 (and the first ring 120) is rotated counterclockwise approximately once from the zero stop state shown in FIG. 4, the first protrusion 121 reaches a position adjacent to the first pin 151 in the clockwise direction, and the follower 141 rotating in conjunction with the first ring 120 reaches and engages with the connection holding unit 131c.

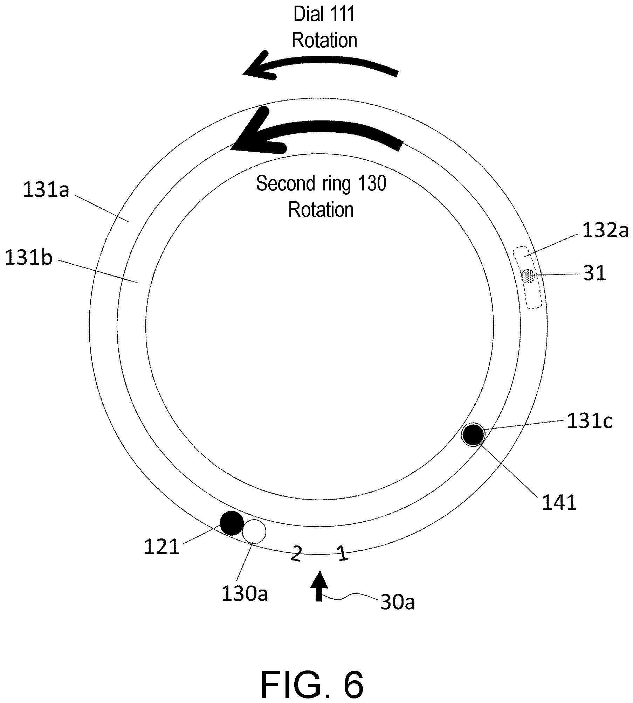

When the dial 111 is further rotated counterclockwise in the state shown in FIG. 5, the second ring 130 starts to rotate in conjunction with the dial 111 as shown in FIG. 6. The positional relationship between the second ring 130 and the housing 30 changes due to the rotation of the second ring 130. As the second protrusion 31 moves from the end unit in the counterclockwise direction of the rotation limiting groove 132a to the end unit in the clockwise direction, the first pin 151 moves from above the pin control protrusion 32, the pushing up by the pin control protrusion 32 is released, and the first pin 151 retracts from the first track 131a due to the elastic force of the spring 151a. Furthermore, as the rotation position of the second ring 130 changes, the rotation indicator read at the reference position 30a also changes from the rotation indicator of the first revolution to the rotation indicator of the second revolution.

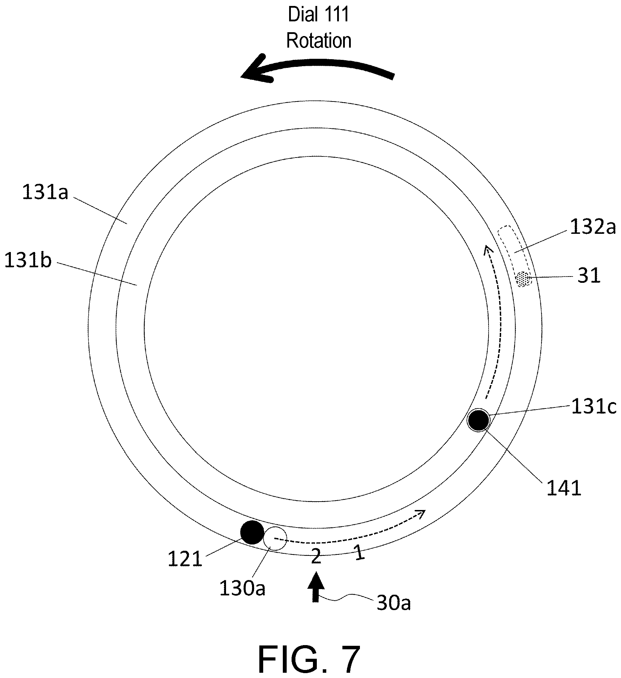

As shown in FIG. 7, when the second protrusion 31 reaches the end unit in the clockwise direction of the rotation limiting groove 132a and the pushing up of the first pin 151 is released, the rotation indicator indicating the second rotation displayed on the second ring 130 reaches the rotation position read at the reference position 30a.

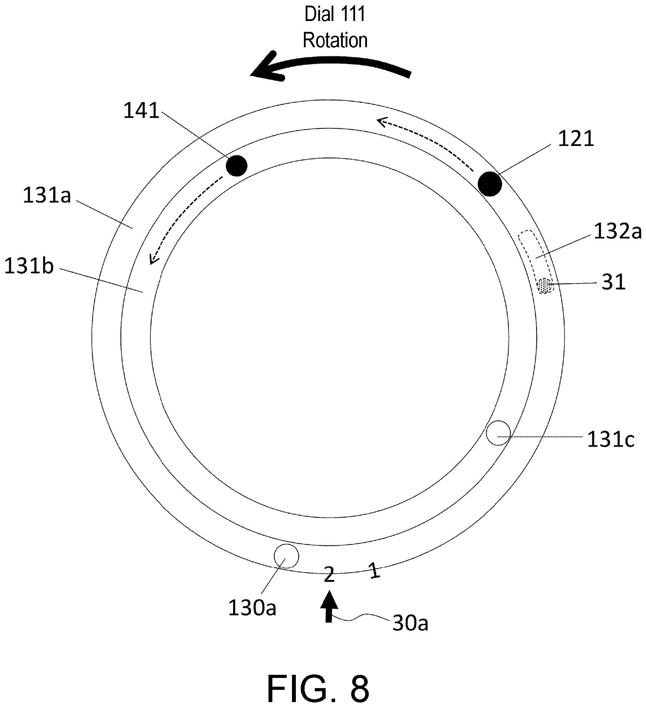

In the state shown in FIG. 7, when the dial 111 (and the first ring 120) is further rotated counterclockwise, when the second protrusion 31 reaches the end unit in the clockwise direction of the rotation limiting groove 132a, the second ring 130 is prevented from rotating in the counterclockwise direction, as a result, the follower 141 is released from the connection holding unit 131c, and the interlocking of the second ring 130 ends. Therefore, from then on, merely the first ring 120 continues to rotate in conjunction with the dial 111 as shown in FIG. 8.

Further, after rotating counterclockwise, when rotating clockwise, the operation flow is reversed from the operation flow in the case of counterclockwise rotation described above, returning the rotation to the zero-in adjusted position and activating the zero stop function.

With the above-described simple configuration, while achieving the zero stop function, the first pin 151 protruding to form the zero stop state can be prevented from becoming an obstacle to the transition to the second rotation when the first ring 120 moves from the first rotation to the second rotation. In addition, the change in the position of the second ring 130 in the rotation direction with respect to the reference position 30a of the housing 30 before and after the interlocking rotation of the second ring 130 is used as a rotation indicator, allowing the user to easily recognize the number of rotations of the dial 111.

### <Second embodiment>

In the optical sight 10 of the first embodiment, rotation of the first ring 120 in the first rotation direction is not impeded even after a third rotation. However, since the rotation indicator is merely provided up to the second rotation, it is desirable that the first ring 120 be unable to rotate in the first rotation direction once the second rotation has been completed.

Therefore, a second pin 152 is provided between the second ring 130 and the housing 30 and is pressed from the second ring 130 side toward the housing 30 side. The second ring 130 may be provided with a second through hole130b that penetrates the first surface 131 and the second surface 132. The application of pressure from the second ring 130 side toward the housing 30 side may be achieved, for example, by inserting a spring 152a between the second ring 130 and the second pin 152. Specifically, for example, a pin with a head is used as the second pin 152, and a compression coil spring is used as the spring 152a. Then, the shaft unit of the second pin 152 is inserted into the coil of the spring 152a from the other end of the spring 152a of which one end is supported by the second surface 132 of the second ring 130, and is configured to be pressed against the head seat of the second pin 152 by the elastic force of the spring 152a.

As the second ring 130 starts to rotate in conjunction with the first ring 120, by the movement of the position of the pin control protrusion 32 relative to the second ring 130, the pushing up of the first pin 151 is released, and the second pin 152 is pushed up from the head by the pin control protrusion 32, passes through the second through hole 130b, and protrudes into the first track 131a. In this way, after the second rotation, the first protrusion 121 of the first ring 120 is prevented from advancing further by the second pin 152, thereby limiting the rotation of the first ring 120 to two rotations.

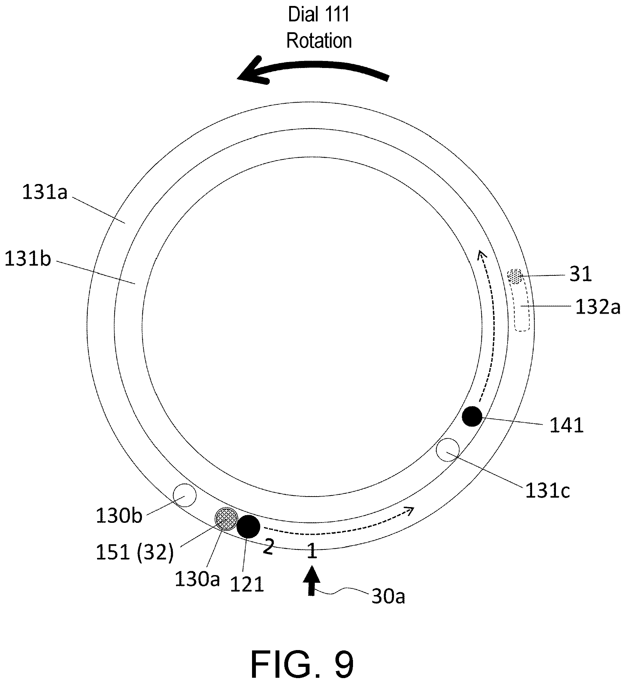

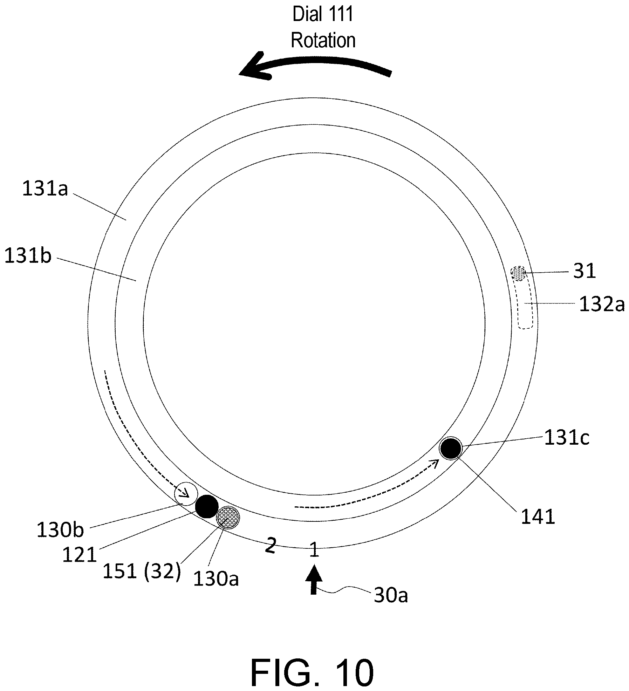

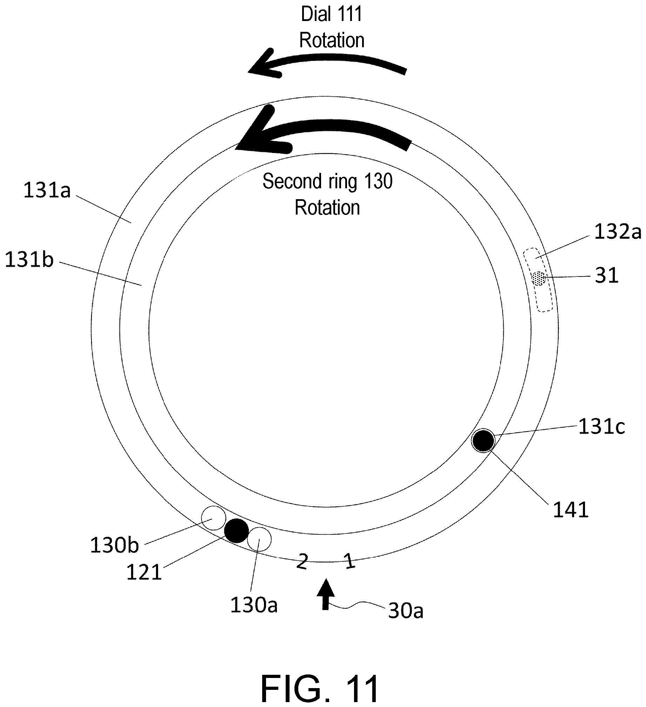

With the configuration, how the various components of the impact point adjustment unit 100 work together will be described with reference to FIGS. 9 to 13. The method of illustrating the figures is the same as the method of FIGS. 4 to 8.

Referring to FIGS. 9 to 11, the configuration and operation are the same as the configuration and operation described with reference to FIGS. 4 to 6, except that the second through hole 130b (and the second pin 152 and the spring 152a behind thereof) are provided in the vicinity of the first through hole 130a (and the first pin 151 and the spring 151a behind thereof) in the clockwise direction.

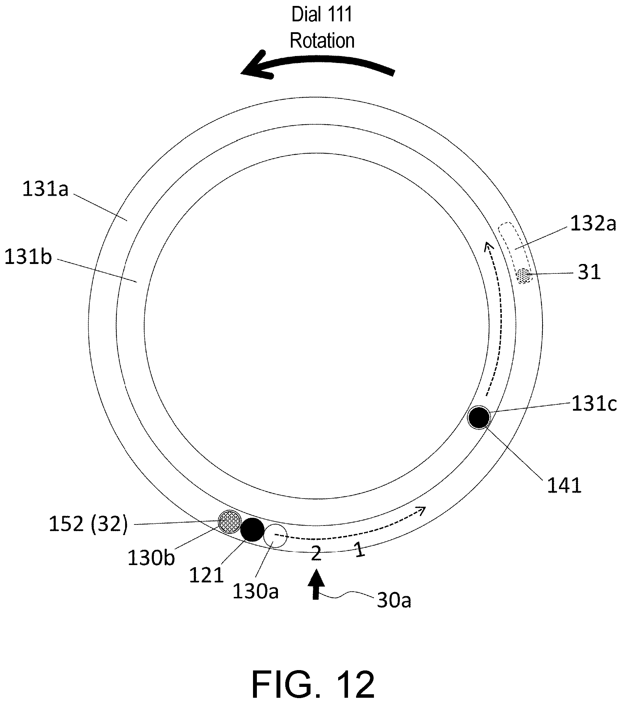

As shown in FIG. 12, when the second protrusion 31 reaches the end unit in the clockwise direction of the rotation limiting groove, and the pushing up of the first pin 151 is released, the second pin 152 moves above the pin control protrusion 32 and is pushed up from the head by the pin control protrusion 32. When the shaft unit passes through the second through hole 130b and protrudes into the first track 131a, the rotation indicator indicating the second rotation displayed on the second ring 130 reaches the rotation position read at the reference position 30a.

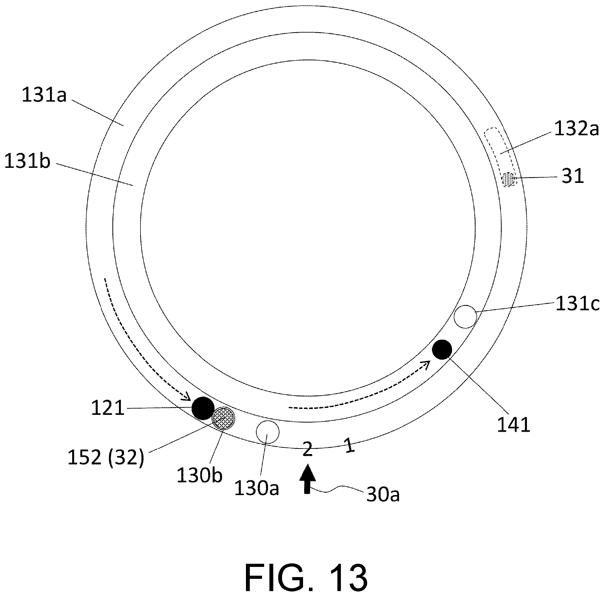

In the state shown in FIG. 12, when the dial 111 (and the first ring 120) is further rotated counterclockwise, when the second protrusion 31 reaches the end unit in the clockwise direction of the rotation limiting groove 132a, the second ring 130 is prevented from rotating in the counterclockwise direction, as a result, the follower 141 is released from the connection holding unit 131c, and the interlocking of the second ring 130 ends. Therefore, from then on, merely the first ring 120 continues to rotate in conjunction with the dial 111, as shown in FIG. 13, and when the first protrusion 121 reaches the position of the second pin 152, the second pin 152 prevents the first protrusion 121 from advancing any further.

With the above-described configuration, after the first ring 120 (dial 111) has completed a second rotation in the first rotation direction, further rotation in the first rotation direction is prevented.

### <Third embodiment>

In the optical sight 10 of the first embodiment and the second embodiment, although the rotation range of the second ring 130 is limited by the second protrusion 31 engaged with the rotation limiting groove 132a, the second ring 130 is still freely rotatable within this range, and malfunction may occur. If the second ring 130 malfunctions, the rotation indicator may not be provided correctly, or the position at which the advancement of the first protrusion 121 is blocked may become incorrect.

Therefore, in order to prevent such malfunctions, the position of the second ring 130 in the rotation position is maintained at a constant position during each of the first rotation and the second rotation of the first ring 120. Furthermore, a first holding unit 132b and a second holding unit 132c, which are two recesses, are provided on the second surface 132 of the second ring 130, a malfunction prevention body 153 may be provided between the second ring 130 and the housing 30 and pressed against the second surface 132 of the second ring 130 from the housing 30 side. The malfunction prevention body 153 is preferably a sphere such as a steel ball, which can easily roll or slide smoothly on the second surface 132 of the second ring 130 in response to the rotation of the second ring 130. The pressing of the malfunction prevention body 153 against the second surface 132 of the second ring 130 from the housing 30 side may be achieved, for example, by inserting a spring 153a such as a compression coil spring between the housing 30 and the malfunction prevention body 153. Specifically, for example, the malfunction prevention body 153 may be sandwiched between the other end of the spring 153a of which one end is supported on the surface of the housing 30 facing the second ring 130 and the second surface 132 of the second ring 130.

When the first ring 120 moves from the first rotation to the second rotation, when the second ring 130 rotates in the first rotation direction in conjunction with the first ring 120, the position of the second ring 130 moves relative to the malfunction prevention body 153, and the malfunction prevention body 153 that has been fitted into the first holding unit 132b during the first rotation is fitted into the second holding unit 132c.

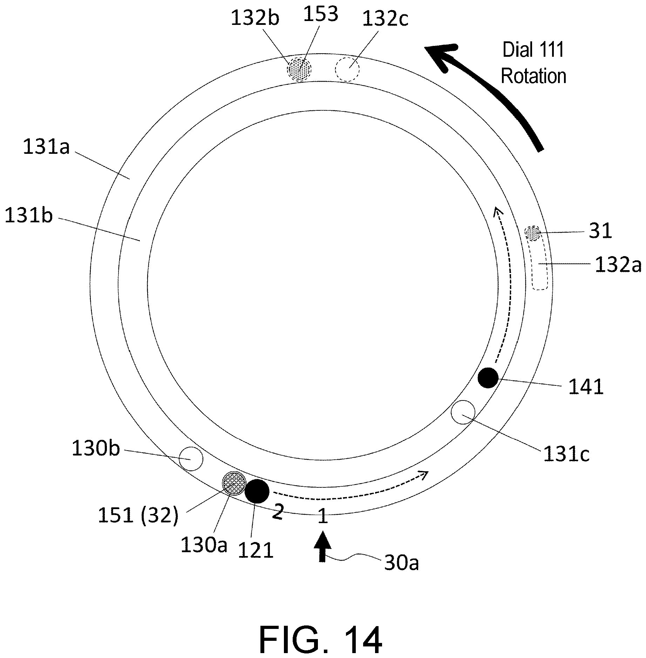

With the configuration, how the various components of the impact point adjustment unit 100 work together will be described with reference to FIGS. 14 to 17. The method of illustrating the figures is the same as the method of FIGS. 4 to 13.

FIG. 14 shows the zero stop state. The configuration and operation are the same as the configuration and operation described with reference to FIG. 4, but differs in that further, the first holding unit 132b and the second holding unit 132c are arranged side by side in the clockwise direction, and the malfunction prevention body 153 is engaged with the first holding unit 132b. The engagement of the malfunction prevention body 153 with the first holding unit 132b is maintained throughout the first rotation, preventing malfunction during that time.

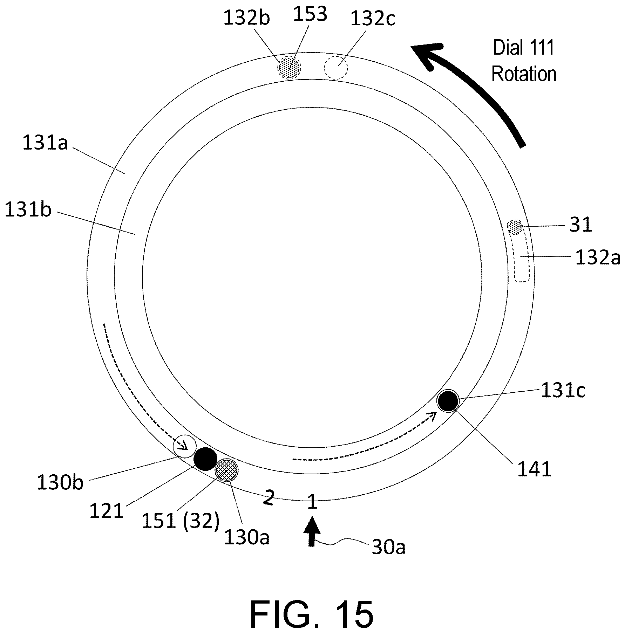

FIG. 15 shows a state in which the dial 111 (and the first ring 120) has been rotated counterclockwise approximately once from the zero stop state shown in FIG. 14, and the configuration and operation are the same as the configuration and operation described in FIG. 5, except that the first holding unit 132b and the second holding unit 132c are provided, and the malfunction prevention body 153 is engaged with the first holding unit 132b.

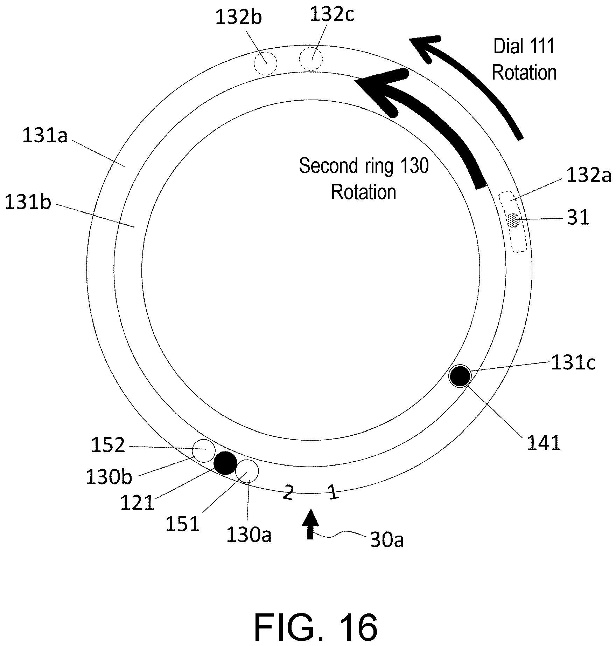

When the dial 111 is further rotated counterclockwise in the state shown in FIG. 15, the second ring 130 starts to rotate in conjunction with the dial 111 as shown in FIG. 16. The positional relationship between the second ring 130 and the housing 30 changes due to the rotation of the second ring 130, as the second protrusion 31 moves from the end unit in the counterclockwise direction of the rotation limiting groove 132a to the end unit in the clockwise direction, when the first pin 151 moves from above the pin control protrusion 32 and the pushing up by the pin control protrusion 32 is released, the first pin 151 retracts from the first track 131a due to the elastic force of the spring 151a. Furthermore, as the rotation position of the second ring 130 changes, the rotation indicator read at the reference position 30a also changes from the rotation indicator of the first revolution to the rotation indicator of the second revolution. Furthermore, the malfunction prevention body 153 detaches from the first holding unit 132b and moves on the second surface 132 of the second ring 130 toward the second holding unit 132c.

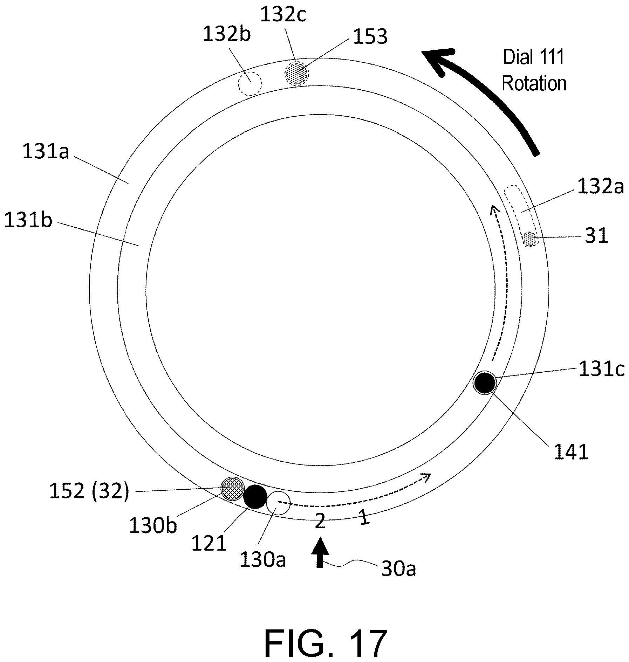

As shown in FIG. 17, the malfunction prevention body 153 engages with the second holding unit 132c when the second protrusion 31 reaches the end unit in the clockwise direction of the rotation limiting groove 132a, the pushing up of the second pin 152 is released, the second pin 152 is pushed up and protrudes into the first track 131a, and the rotation indicator indicating the second rotation displayed on the second ring 130 reaches the rotation position read at the reference position 30a.

In the state shown in FIG. 17, when the dial 111 (and the first ring 120) is further rotated counterclockwise, the interlocking of the second ring 130 ends and the second rotation starts, but the engagement of the malfunction prevention body 153 with the second holding unit 132c is maintained throughout the second rotation, thereby preventing malfunction even during the second rotation.

With the above configuration, the position of the second ring 130 in the rotation direction is maintained at a constant position during each of the first rotation and the second rotation of the first ring 120, and an accurate rotation indicator is provided.

### Description of Reference Numerals

10: Optical sight
20: Optical system
21: Lens holding tube
22: Leaf spring
30: Housing
30a: Reference position
31: Second protrusion
32: Pin control protrusion
40: Focus adjustment unit
50: Illumination adjustment unit
60: Magnification adjustment unit
70: Diopter adjustment unit
100: Impact point adjustment unit
110: Adjustment mechanism
111: Dial
112: Shaft drive unit
112a: Rotating ring
112b: Shaft
112c: Shaft base
112d: Lock ring
113: Fixing screw
120: First ring
120a: Connecting screw
121: First protrusion
130: Second Ring
130a: First through hole
130b: Second through hole
131: First surface
131a: First track
131b: Second track
131c: Connection holding unit
132: Second surface
132a: Rotation limiting groove
132b: First holding unit
132c: Second holding unit
141: Follower
141a, 151a, 152a, 153a: Spring
151: First pin
152: Second pin
153: Malfunction prevention body

## Claims

1. An optical sight (10) for allowing a user to visually recognize a target, comprising:
an optical system (20), comprising a lens holding tube (21) in which a lens group is housed;
a housing (30), housing the optical system (20); and
an impact point adjustment unit (100), provided on the housing (30) and comprising an adjustment mechanism (110) that changes an inclination of the lens holding tube (21) by the user rotating a dial (111) without moving the dial (111) up or down, and
the impact point adjustment unit (100) further comprising
a first ring (120) which is connected to the dial (111) and rotates integrally with the dial (111), and
a second ring (130) which is provided between the first ring (120) and the housing (30),
the first ring (120) comprising a first protrusion (121) that protrudes toward the second ring (130), and being connected to the adjustment mechanism (110) via the dial (111) in a zero stop state in which the first ring (120) is rotatable merely in a first rotation direction,
the zero stop state being formed in such a manner that a first pin (151) protruding from the second ring (130) toward the first ring (120) prevents the first protrusion (121) from advancing in a second rotation direction which is opposite to the first rotation direction, and
the first pin (151) retracting from the second ring (130) after the first ring (120) starts to rotate in the first rotation direction and before the first protrusion (121) reaches a position of the first pin (151).

2. The optical sight (10) according to claim 1, wherein the impact point adjustment unit (100) further comprises a mechanism for providing a rotation indicator which enables the number of rotations of the dial (111) to be recognized based on a change in a position of the second ring (130) in a rotation direction before and after interlocking rotation by rotating the second ring (130) in conjunction with the first ring (120) within a certain range when the first ring (120) advances from a first rotation to a second rotation in the first rotation direction.

3. The optical sight (10) according to claim 2, further comprising:
a follower (141), present between the first ring (120) and the second ring (130), and pressed against the second ring (130) from the first ring (120) side, and
the second ring (130) comprising a connection holding unit (131c), which is a recess, on a first surface (131) that faces the first ring (120), a rotation limiting groove (132a) extending a certain length on a second surface (132) facing the housing, and a first through hole (130a) that penetrates the first surface (131) and the second surface (132),
the first pin (151) being present between the second ring (130) and the housing (30) and pressed from the second ring (130) side toward the housing (30) side,
the housing (30) comprising a second protrusion (31) and a pin control protrusion (32) that protrude toward the second ring (130),
the zero stop state being formed in such a manner that the first pin (151) is pushed up by the pin control protrusion (32), passes through the first through hole (130a), and protrudes into a first track (131a) of an annular shape on the first surface (131) that is traced by the first protrusion (121) as the first ring (120) rotates, and the first protrusion (121) is prevented from advancing in the second rotation direction, and
the mechanism for providing a rotation indicator being achieved by being configured in such a manner that the follower (141) following the rotation of the dial (111) and tracing a second track (131b) of an annular shape on the first surface (131) engages with the connection holding unit (131c) formed on the second track (131b) when the dial (111) rotates once in the first rotation direction, and the second ring (130) starts to rotate in conjunction with the first ring (120), as a result, a position of the pin control protrusion (32) relative to the second ring (130) is moved, pushing up of the first pin (151) is released, and the first pin (151) is retracted from the first track (131), so that the first protrusion (121) is capable of passing over the first through hole (130a), and furthermore, after the second protrusion (31) engaged with the rotation limiting groove (132a) moves from one end of the rotation limiting groove (132a) and reaches the other end, when the first ring (120) is further rotated, the follower (141) is released from the connection holding unit (131c), the interlocking of the second ring (130) is released, and the first ring (120) starts a second rotation in the first rotation direction.

4. The optical sight (10) according to claim 3, further comprising:
a second pin (152), present between the second ring (130) and the housing (30) and pressed from the second ring (130) side toward the housing (30) side; and
a second through hole (130b), formed in the second ring (130) and penetrating the first surface (131) and the second surface (132), wherein
when the second ring (130) starts to rotate in the first rotation direction in conjunction with the first ring (120), the position of the second ring (130) relative to the pin control protrusion (32) is moved, the pushing up of the first pin (151) is released, and then the second pin (152) is pushed up, passes through the second through hole (130b), and protrudes into the first track (131a) of an annular shape on the first surface (131) that is traced by the first protrusion (121), and a second rotation of the first ring (120) in the first rotation direction ends when the advancement of the first protrusion (121) is blocked by the second pin (152).

5. The optical sight (10) according to claim 3 or 4, further comprising:
a first holding unit (132b) and a second holding unit (132c) which are two recesses formed on the second surface (132) of the second ring (130); and
a malfunction prevention body (153), provided between the second ring (130) and the housing (30) and pressed against the second ring (130) from the housing (30) side, wherein
when the first ring (120) advances from the first rotation to the second rotation in the first rotation direction, the second ring (130) rotates in the first rotation direction in conjunction with the first ring (120), the position of the second ring (130) relative to the malfunction prevention body (153) is moved, and the malfunction prevention body (153) which has been fitted into the first holding unit (132b) during the first rotation moves to and engages with the second holding unit (132c).
